# EUROPEAN PATENT SPECIFICATION

(11) **EP 4 176 592 B1**
(45) Date of publication and mention of the grant of the patent: **26.11.2025**
(21) Application number: 21735317.6
(22) Date of filing: 28.06.2021
(51) Int. Cl.: H04W 4/029, H04W 4/80

(54) **ASSET-TRACKING SYSTEM**
SYSTEM ZUR VERFOLGUNG VON VERMÖGENSWERTEN
SYSTÈME DE SUIVI DES ÉLÉMENTS ACTIFS

(30) Priority: 02.07.2020 EP 20183594
(43) Date of publication of application: 10.05.2023
(73) Proprietor: Signify Holding B.V., 5656 AE Eindhoven (NL)
(72) Inventor: WANG, Xiangyu, 5656 AE Eindhoven (NL); SANTANA ARNAIZ, Octavio, Alejandro, 5656 AE Eindhoven (NL); LELKENS, Armand, Michel, Marie, 5656 AE Eindhoven (NL)
(74) Representative: Verweij, Petronella Daniëlle
(86) International application number: PCT/EP2021/067602
(87) International publication number: WO 2022/002807

(56) References cited:
- EP-A1- 2 662 703
- EP-A1- 3 102 962
- EP-A1- 3 623 837
- US-A1- 2015 247 915
- US-A1- 2019 278 952

## Description

### FIELD OF THE INVENTION

The invention relates to an asset-tracking system. The invention further relates to a method for localizing an emission location of a beacon signal. The invention further relates to a lighting device.

### BACKGROUND OF THE INVENTION

Asset-tracking systems are known in the art. For instance, US10049552B1 describes an asset tracking system having a plurality of anchors. A tag communicates with the anchors as it is moved by a user being tracked by the system, and data based on communication between the tag and at least one of the anchors is transmitted to a server. The server determines a location of the tag based on the data and detects an occurrence of an event based on the location. The server also transmits to each of the anchors a tag alert message having a tag identifier identifying the tag and an event indicator associated with the occurrence of the event. At least one of the anchors transmits the tag identifier and the event indicator to the tag, which issues a warning to the user in response to tag alert message.

Document EP3102962A1 discloses an asset-tracking system, in which a wireless network of reference nodes measure a signal received from a mobile device and report their respective measurement reports to a location server.

### SUMMARY OF THE INVENTION

Asset tracking systems may typically comprise three types of field devices: (mobile) tags, listener nodes (or "anchors"), and gateways. In such a system, the tags may emit beacon signals, and the listener nodes may detect incoming beacon signals sent by tags and conduct measurements such as signal strength measurements. Measurements may typically be conducted by multiple listener nodes and the listener nodes may send those results to a gateway from where they may be further processed, such as by further forwarding them to a positioning engine on a server or in the cloud.

This system design may be straightforward and simple. However, the traffic load (or: "network load") on the network may scale linearly with the product of the number of tags and the number of listener nodes. A high traffic load may generally be undesirable, as the bandwidth of the network may also be needed for other traffic.

Hence, the prior art system may require a high bandwidth network.

In particular, for deployments in commercial buildings, where typically more than 150 nodes may be needed per gateway, this approach may be incompatible with low data rate networks such as ZigBee mesh or BLE mesh, which may be preferable due to low cost, low power consumption, and the ability to have large network coverage area.

Hence, it is an aspect of the invention to provide an alternative asset-tracking system, which preferably further at least partly obviates one or more of above-described drawbacks. The present invention may have as object to overcome or ameliorate at least one of the disadvantages of the prior art, or to provide a useful alternative.

The present invention is defined by the appended indepdenent claims and dependent claims.

Hence, in a first aspect, the invention may provide an asset-tracking system for tracking a tag, especially in a space. In particular, the tag may periodically emit a beacon signal. The asset-tracking system may further comprise a plurality of listener nodes (also: "listeners"). The plurality of listener nodes may especially be arranged in the space. The plurality of listener nodes may especially be configured to detect (or: "receive") the beacon signal. In embodiments, the asset-tracking system may comprise a control system, especially wherein the control system has access to location data of the plurality of listener nodes. The asset-tracking system may further have (or "be operated in") an operational mode. The operational mode may comprise a detection stage, an announcement stage, a reporter selection stage, a reporting stage, and/or a localization stage.

In the detection stage, each listener node of the plurality of listener nodes may (independently) determine a signal property (of the beacon signal) upon detecting the beacon signal, *i.e.,* each listener node exposed to the beacon signal may detect the beacon signal and (independently) determine a signal property (of the beacon signal). In embodiments, in the detection stage, the listener node may (independently) determine a (respective) announcement delay based on the signal property (as determined by the listener node). The signal property may especially be derived from the beacon signal.

In the announcement stage, each listener node may announce a (respective) measurement signal, especially a measurement signal comprising the signal property, after the (respective) announcement delay (as determined by the listener node), especially after an announcement delay from the detection of the beacon signal, to a (respective) related proper subset of the plurality of listener nodes unless the listener node has received a predetermined signal. In embodiments, the predetermined signal may be a predetermined number n₁ of measurement signals, especially n₁ measurement signals from other listener nodes of the related proper subset.

In the reporter selection stage, one or more reporting listener nodes may be selected from the plurality of listener nodes. In particular, the one or more reporting listener nodes may be a proper subset of the plurality of listener nodes.

In the reporting stage, the one or more reporting listener nodes may provide an aggregate signal to the control system. The aggregate signal may especially comprise data related to a plurality of measurement signals, especially a plurality of measurement signals received by the one or more reporting listener nodes.

In the reporter selection stage, each listener node that announces its measurement signal to the related proper subset having received exactly a second predefined number n₂ of measurement signals (from the related proper subset), at the moment of announcing, is selected as one of the one or more reporting listener nodes, especially wherein n₂ is selected from the range of 0-10.

In the localization stage, the control system may determine a location of the tag based on the aggregate signal and the location data.

The asset-tracking system of the invention may provide the benefit that the traffic load may be substantially reduced. In particular, the asset-tracking system of the invention may reduce traffic load by local processing within a network by involved listeners in a distributed way. Significant load reduction may be achieved, facilitating asset-tracking using a low-bandwidth network, even if the network comprises many nodes.

Thereby, the invention may facilitate asset-tracking with networks employed for a different primary (or secondary) function, such as a network for lighting control. In particular, a lighting control network may preferably be based on a low bandwidth network, such as ZigBee or Bluetooth.

In particular, the invention may enable (substantially) reducing the traffic load while maintaining positioning accuracy.

Hence, in specific embodiments, the invention may provide an asset-tracking system for tracking a tag in a space, wherein the tag periodically emits a beacon signal, wherein the asset-tracking system comprises a plurality of listener nodes arranged in the space and configured to detect the beacon signal, and wherein the asset-tracking system comprises a control system, wherein the control system has access to location data of the plurality of listener nodes wherein in an operational mode: each listener node of the plurality of listener nodes determines a signal property upon detecting the beacon signal, wherein the listener node determines an announcement delay based on the signal property; each listener node announces a measurement signal after the announcement delay to a related proper subset of the plurality of listener nodes unless the listener node has received a predetermined number n₁ of measurement signals; one or more reporting listener nodes are selected from the plurality of listener nodes, wherein the one or more reporting listener nodes are a proper subset of the listener nodes; the one or more reporting listener nodes provide an aggregate signal to the control system, wherein the aggregate signal comprises data related to a plurality of measurement signals; and the control system determines a location of the tag based on the aggregate signal and the location data.

Hence, the invention may provide an asset-tracking system for tracking a tag in a space. The term "asset-tracking system" may refer to any system configured to track the location and/or movement of one or more objects, especially tags, within a space, especially within a (defined) space.

The term "tag" may herein refer to an object that may be tracked, especially a uniquely identifiable object, such as by being provided with a tag identification. The tag may especially be connected to a (larger) object that is desired to be tracked, such as attached to an object, or such as worn by a person. For example, the tag may comprise one or more of a sticker, a badge, a wristband, and a token. Further, the tag may be configured to emit a wireless signal, such as a radio beacon, or such as a Bluetooth low energy beacon.

The term "space" may herein refer to any space in which it may be desirable to track the whereabouts of the tag. The space may especially comprise a (part of) a building, such as (part of) a shopping mall, a factory or a hospital. The space may, however, also be located outside. The space may, for example, comprise a recreational park or a farm. In embodiments, the term "space" may refer to an office, a shop, a warehouse, a theater, a hospitality area, a hospital, an elderly home, a hotel, a plant, an airport, a shopping mall, a factory, a horticulture plant. The term space may refer to an indoor space or an outdoor space, especially an indoor space.

The tag may periodically emit a beacon signal. In embodiments, the tag may emit a beacon signal according to a regular period, such as every 15 minutes. However, in further embodiments, the tag may emit the beacon signal according to an irregular period, such as a period varying over the time of day, or whenever an external signal is received, or whenever the tag is moved. For example, the tag may comprise a (passive) RFID tag and may emit the beacon signal upon receiving a (suitable) radio wave.

The beacon signal may comprise any type of signal that may be detectable by the listener nodes. In embodiments, the beacon signal may, for example, comprise a wireless communication signal, such as a wireless communication signal selected from the group comprising Bluetooth signals, ZigBee (beacon packet) signals, Wi-Fi (beacon packet) signals, ultra-wideband packet signals, and thread signals.

In embodiments, the beacon signal may comprise one or more carrier frequencies, especially a plurality of carrier frequencies.

The beacon signal may especially comprise a tag identification code. The tag identification code may be specific for the tag, and may especially be suitable to uniquely identify the tag. Thereby, different tags may be distinguished, and different (tagged) objects may be (independently) tracked.

The beacon signal may also comprise a beacon signal sequence number. The beacon signal sequence number may be specific for the tag in a given time, and may be increased sequentially until it reaches the maximum number allowed before it wraps back to the minimum number allowed. Thereby, different beacon signals may be distinguished, and different beacon signals from the tag may be uniquely identified, by e.g. the listeners, within a short period of time, within which it is known to be impossible to have more than one beacon signal from the tag with identical sequence numbers.

The asset-tracking system may comprise a plurality of listener nodes. Listener nodes may in the art generally also be referred to as "tag listener", "tag locator", "anchor node", "tag scanner", "reference node", and "sniffer". In embodiments, the listener nodes may be configured to detect (or: "receive") the beacon signal, *i.e.,* the listener nodes may be capable of detecting the beacon signal. The listener nodes may especially be passively detecting the beacon signal. In further embodiments, the listener nodes may comprise antenna configured for detecting (or: "receiving") the beacon signal.

The listener nodes may especially be arranged in the space, *i.e.,* in the space in which a tag is to be tracked. It will be clear to the person skilled in the art that the listener nodes may be arranged in locations the tag generally does not reach, e.g., the tag may be used to track a person in an office building, and the listener nodes may be arranged in the lighting system of the office building.

In embodiments, the asset-tracking system may further comprise a control system. The control system may especially be configured to control the asset-tracking system, especially the plurality of listener nodes.

In embodiments, the control system may have access to location data of the plurality of listener nodes. The location data may especially comprise data on the locations of (each of) the plurality of listener nodes in the space, such as data regarding the rooms of (each of) the listener nodes, or such as coordinates of (each of) the listener nodes.

In embodiments, the location data may further comprise connectivity data, wherein the connectivity data indicate the connectedness between the listener nodes. Specifically, the connectivity data may indicate which listener nodes may directly communicate. Further, the connectivity data may indicate the number of hops between any two of the plurality of listener nodes. Thereby, the control system may, for example, have access to the information which listener nodes a specific reporting listener could be reporting the data of (depending on the settings of the asset-tracking system, especially with regard to hop distance).

The asset-tracking system, especially the control system, may have an operational mode. The term "operational mode" may also be indicated as "controlling mode". The system, or apparatus, or device (see further also below) may execute an action in a "mode" or "operational mode" or "mode of operation". Likewise, in a method an action, stage, or step may be executed in a "mode" or "operation mode" or "mode of operation". This does not exclude that the system, or apparatus, or device may also be adapted for providing another controlling mode, or a plurality of other controlling modes. Likewise, this does not exclude that before executing the mode and/or after executing the mode one or more other modes may be executed. However, in embodiments a control system (see further also below) may be available, that is adapted to provide at least the controlling mode. Would other modes be available, the choice of such modes may especially be executed via a user interface, though other options, like executing a mode in dependence of a sensor signal or a (time) scheme, may also be possible. The operation mode may in embodiments also refer to a system, or apparatus, or device, that can only operate in a single operation mode (i.e. "on", without further tunability).

The operational mode may comprise a detection stage, an announcement stage, a reporter selection stage, a reporting stage, and/or a localization stage.

In embodiments, in the detection stage, each listener node of the plurality of listener nodes may (independently) determine a signal property upon detecting the beacon signal. Hence, after the tag emits the beacon signal, a subset of the listener nodes may detect (or: "receive") the beacon signal. Each of the listener nodes that detects the beacon signal may then (independently) determine a signal property, wherein the signal property relates to the detection of the beacon signal, especially wherein the signal property is derived from the (detection of the) beacon signal. In embodiments, the signal property may be selected from the group comprising a signal strength, a signal quality, a distance estimate, an angle estimate and a phase estimate. In particular, the signal property may be related to a distance between the tag and the (respective) listener node. For example, the signal strength may weaken as the beacon signal travels further from the tag. Hence, if a listener node detects the beacon signal with a strong signal strength, the tag may be close, whereas if the listener node detects the beacon signal with a weak signal strength, the tag may be far. Similarly, the signal quality may also decrease as the beacon signal travels further from the tag. The term "signal property" may herein also refer to a plurality of signal properties.

The term "upon" may herein refer to while and/or after. Hence, the listener node may determine a signal property while and/or after detecting the beacon signal. For example, the listener node may determine a signal strength of the beacon signal (as detected) while detecting the beacon signal, and may determine an estimated distance (directly) after detecting the beacon signal.

The term "signal strength" may herein especially refer to the power present in the detected beacon signal. In particular, the signal strength may corresponding to a Received Signal Strength Indication (RSSI).

The term "signal quality" may herein especially refer to the quality of the detected beacon signal. In particular, the quality may, for example, be determined by comparing the detected beacon signal to a (perfect) sigmoidal signal. The signal quality may be indicative of the how informative/trustworthy the signal is. For example, a very strong signal may generally suggest a close proximity to the tag, but if the very strong signal has a poor quality, this may be indicative of issues with respect to the measurement and/or interference.

In embodiments, in the detection stage, the (respective) listener node may (independently) determine an announcement delay based on the signal property (of the beacon signal). Hence, each listener node that detected the beacon signal may evaluate the signal property, especially the signal properties, of the detected beacon signal, and may determine an announcement delay accordingly. In particular, the listener node may determine how informative its detection of the beacon signal is with respect to localization of the tag based on the signal property. In particular, in embodiments, the more informative the listener node deems its detection to be (see below), the shorter an announcement delay it selects.

In the announcement stage, each listener node may announce a (respective) measurement signal after the measurement delay to a related proper subset of the plurality of listener nodes unless the listener node has received a predetermined signal. Hence, each listener node may essentially wait for a predetermined signal for the (self-determined) measurement delay. In the absence of the predetermined signal, after the measurement delay, the listener node then announces the (respective) measurement signal to the related proper subset of the plurality of listener nodes.

The term "related proper subset" may herein especially refer to the proper subset of the plurality of listener nodes that the respective listener node is in (direct) contact with, such as all the listener nodes that are arranged in the network (of the plurality of listener nodes) within 2 hops, such as at a distance of 1 hop.

The term "proper subset" may refer herein to a subset that comprises at least one but not all of the elements of the corresponding superset.

The measurement signal may especially comprise the signal property. In embodiments, the measurement signal may further comprise a listener node identification signal, wherein the listener node identification signal uniquely identifies the (respective) listener node.

In embodiments, the predetermined signal may be a specific signal sent by one or more of the plurality of listener nodes and/or by the control system.

In particular, each listener node may announce the measurement signal after the measurement delay after detecting the beacon signal unless the listener node has received a predetermined signal. Hence, the timer of the measurement delay may start running from the moment of the detection of the beacon signal.

In further embodiments, however, the predetermined signal may be a predetermined number n₁ of measurement signals, especially a predetermined number n₁ of measurement signals from other listener nodes (in the related proper subset).

Hence, each node may determine a measurement delay based on how informative their signal property is, wherein for each listener node, the measurement delay may be selected such that a more informative signal property results in a lower measurement delay. Next, each listener node may announce a measurement signal, especially comprising the signal property, to their related proper subset after the measurement delay, unless a predetermined number n₁ of measurement signals were already received. If the predetermined number n₁ of measurement signals were already received, then this implies a predetermined number n₁ of other listener nodes determined a more informative signal property. Hence, in order to reduce bandwidth usage, the respective listener node may refrain from announcing the measurement signal.

In further embodiments, the predetermined signal may comprise an announcement from another listener node in the related proper subset that the other listener node will be a reporting listener node. This may work particularly well with regard to embodiments wherein n₂=n₁-1 (see below).

A listener node that announces their measurement signal may herein also be referred to as an "announcing listener node".

In the reporter selection stage, one or more reporting listener nodes may be selected from the plurality of listener nodes. In particular, in embodiments, the one or more reporting listener nodes may be a proper subset of the listener nodes. In embodiments, the selection of the one or more reporting listener nodes may especially be based on an order in which the listener nodes announce the (respective) measurement signals (see below). In further embodiments, the selection of the one or more reporting listener nodes may be performed by the control system (also see below).

In the reporting stage, the one or more reporting listener nodes may provide an aggregate signal to the control system, especially wherein the aggregate signal comprises data related to a plurality of measurement signals (received by the one or more reporting listener nodes).

Hence, the one or more reporting listener nodes may aggregate the measurement signals received by the reporting listener nodes to an aggregate signal, and may provide the aggregate signal to the control system. The aggregate signal may especially comprise raw and/or unprocessed data related to the received measurement signals. In particular, the aggregate signal may comprise tuples, wherein each tuple comprises a listener node identification signal and the (raw and/or processed) measurement signal from the (respective) listener node.

Hence, the selected one or more reporting listener nodes may report at least part, especially all, of the measurement signals that the selected one or more reporting listener nodes received. In embodiments, the aggregate signal may also comprise the raw and/or processed measurement signal of the one or more reporting listener nodes. In particular, each of the one or more reporting listener nodes may report its measurement signal, *i.e.,* each reporting listener node of the one or more reporting listener nodes may provide an aggregate signal comprising the (raw and/or processed) measurement signal of the (respective) reporting listener node as well as the (raw and/or processed) measurement signals of one or more other listener nodes.

The listener nodes may communicate to each other and with the control system via a wireless communication protocol, especially via one or more of Bluetooth, ZigBee, Wi-Fi, UWB, and Thread. Hence, in embodiments, the listener nodes (and the control system) may be configured for wirelessly communicating via one or more of Bluetooth, ZigBee, Wi-Fi, UWB, and Thread.

In the localization stage, the control system may determine a location of the tag based on the aggregate signal and the location data.

Specifically, the control system may determine of which listener nodes the (raw and/or processed) measurement signals are represented in the aggregate signal, and combine this with the location data to determine the location of the tag. In particular, the control system may determine the location of the tag based on the (raw and/or processed) measurement signals, especially the (raw and/or processed) signal properties, the listener node identification signals, and the location data.

In embodiments, the signal property may be selected from the group consisting of a signal strength, such as a Received Signal Strength Indicator (RSSI), a signal quality, a distance estimate, an angle estimate, and a phase estimate. In further embodiments, the signal property may comprise at least a signal strength, a signal quality, and/or a distance estimate. The term "signal property" may also refer to a plurality of signal properties.

The term "phase estimate" may herein refer to an estimate related to the carrier phase difference that a listener sees in a beacon signal it receives from a tag when the beacon signal comprises multiple carrier frequencies. The signal at each carrier frequency may result in a phase difference relative to the clock frequency of the listener. A phase estimate may be the total phase difference between the minimum carrier frequency and the maximum carrier frequency, or the phase difference averaged or normalized to a unit number of frequency band, e.g. 1MHz.

In further embodiments, the signal property may comprise the signal strength and/or the signal quality, especially wherein the announcement delay is selected to be negatively proportional to the signal property, especially to the signal strength and/or to the signal quality. Hence, the stronger the signal strength and/or the signal quality, which may typically imply more information with regards to the location of the tag, the shorter the announcement delay may be selected to be. In further embodiments, the announcement delay may especially be selected to be inversely proportional to the signal property.

In further embodiments, the signal property may comprise the distance estimate, especially wherein the announcement delay is selected to be proportional to the signal property, especially to the distance estimate. Hence, the smaller the distance estimate, i.e., the closer the tag is estimated to be to the listener node, the smaller the announcement delay may be selected to be.

The term "proportional" herein refers to a positive correlation. In embodiments, the announcement delay may be selected to be linearly dependent on the signal property, especially linearly dependent on a plurality of signal properties. It will be clear to the person skilled in the art, however, that the invention is not limited to a specific relation between the signal property and the announcement delay. For example, in further embodiments, the announcement delay may be selected to be quadratically dependent on the signal property.

In particular, in embodiments, each listener node may evaluate a predefined function for which the signal property, especially the signal properties, is an input parameter, and of which the measurement delay is an output parameter. In embodiments, each listener node may evaluate the same predefined function. In further embodiments, at least two listener nodes of the plurality of listener nodes may evaluate different predefined functions, especially wherein the different predefined functions are assigned to the two listener nodes by the control system.

In further embodiments, the predefined function may further comprise one or more variables of which the value is controlled by the control system. In particular, the control system may be configured to assign values to the one or more variables, especially for specific listener nodes. Hence, in embodiments, at least two listener nodes of the plurality of listener nodes may evaluate the same predefined function but with different values for one or more variables. Thereby, the control system may, for example, give preference to one or more listener nodes, for example because the one or more listener nodes have previously proven particularly informative and/or accurate.

In general, in embodiments, the predefined function may be the same for the plurality of listener nodes, *i.e.,* different output values for different listener nodes may solely be a function of differences in the (values of the) signal property.

The one or more reporting listener nodes (also: "reporting nodes") may be selected from the announcing listener nodes. Hence, the reporter selection stage may comprise selecting the one or more reporting listener nodes from the listener nodes that announced the (respective) measurement signals in the announcement stage.

As mentioned, in the operational mode, especially in the reporter selection stage, each listener node that announces its measurement signal to the related proper subset having received exactly a second predefined number n₂ of measurement signals (from the related proper subset) is selected as one of the one or more reporting listener nodes, especially wherein n₂ is selected from the range of 0-10. Hence, in such embodiments, each listener node may elect themselves as a reporting listener node when announcing their measurement signal based on the number of measurement signals the (respective) listener node has already received from other listener nodes. Such embodiments may be particularly beneficial as the reporting listener nodes may be dynamically selected in a self-organized manner by the listener nodes. Hence, (at least part of the) communication with the control system for selection of the one or more reporting listener nodes can be avoided.

In further embodiments, n₂ may be 0. Hence, a listener node may be selected as a reporting listener node when it is the first listener node in the (respective) related proper subset that announces the (respective) measurement signal. In particular, the listener node may elect to be a reporting listener node when announcing the (respective) measurement signal prior to another listener node in the (respective) proper sensing subset announcing their measurement signal.

In further embodiments, n₂ may be n₁-1. Hence, a listener node may be selected as a reporting listener node when it is the last listener node in the (respective) related proper subset that announces the (respective) measurement signal. In particular, the listener node may elect to be a reporting listener node when announcing the (respective) measurement signal after receiving n₁-1 measurement signals from other listener nodes in the (respective) proper sensing subset.

In embodiments, n₂ may be at least one number selected from the range of 0-10. Hence, each listener node may comprise the second predefined number n₂ defining at least one integer from the range of 0-10. For example, the second predefined number n₂ may comprise the numbers 0 and n₁-1. This may mean that both the first announcing node and the last announcing node may be selected as the reporting nodes.

In embodiments, the control system may set the second predefined number n₂ for a listener node, for example for each one of the plurality of listener nodes.

In embodiments, each listener node of the plurality of nodes may randomly select a value for the second predefined number n₂ from the range of 0-10.

In embodiments, a listener node that is selected to be a reporting listener node, especially upon electing itself to become a reporting listener node, may announce to the related proper subset that it will be a reporting listener node.

The one or more reporting listeners may, however, also be selected by the control system, especially on the basis of one or more of the location of the listener nodes, previous measurement signals of the listener nodes, and the related proper subsets of the listener nodes. For example, in embodiments, the plurality of listener nodes may comprise one or more hub listener nodes, which may have a particularly large related proper subset due to central positions in the listener node network. In such embodiments, the control system may select at least part of the one or more hub listener nodes as at least part of the one or more reporting listener nodes.

Further, the control system may also bias the selection of the one or more reporting listener nodes, *i.e.,* rather than directly selecting the one or more reporting listener nodes, the control system may select criteria for the selection of the one or more reporting listener nodes that bias the selection of the one or more reporting listeners, for example by setting values for variables in the predefined formulae (see above).

Hence, in embodiments, in the operational mode, especially in the reporter selection stage, the control system may select the one or more reporting listener nodes based on the location data. In further embodiments, the one or more reporting listener nodes may comprise at least a first reporting listener node and a second reporting listener node, wherein the first reporting listener node has a first related proper subset, and wherein the second reporting listener node has a second related proper subset, and wherein the first related proper subset and the second related proper subset overlap for at most 50% (with respect to listener nodes; specifically: the number of listener nodes in both subsets relative to the total number of listener nodes in the two subsets), such as at most 40%, especially at most 30%, such as at most 20%, especially at most 10%.

In such embodiments, the reporting listener nodes may wait a predetermined amount of time before sending out an aggregated signal, especially a predetermined amount of time between receiving a first measurement signal and sending out an aggregated signal. Thereby, the aggregated signal may relate to the measurement signals of the listener nodes for which the measurement delay was below a predefined threshold.

Hence, in such embodiments, the predefined signal for the listener nodes may be the predetermined amount of time having passed.

In embodiments, the (respective) related proper subset for each listener node may comprise all (other) listener nodes of the plurality of listener nodes that can be reached from the listener node in n hops, wherein n is selected from the range of 1-4, especially from the range of 1-3, such as from the range of 1-2. Hence, each listener node may have a respective related proper subset.

The asset-tracking system may especially be integrated into other (pre-existing) infrastructure. In particular, in embodiments, the listener nodes may be integrated in lighting devices. Lighting devices may be equipped with low-bandwidth wireless communication devices for controlling the lighting devices. For example, a light generating device may comprise or be functionally coupled to a wireless communication device such that the light generating device can be controlled remotely. Hence, in embodiments, the wireless communication device may comprise a listener node.

The term "lighting device" may herein, for example, refer to one or more of a light generating device, a light control element, such as a light switch, and an (occupancy) sensor.

In further embodiments, the asset-tracking system may comprise a plurality of lighting devices, wherein (at least part of) the plurality of listener nodes are integrated in the lighting devices.

In general, in embodiments, the tag may periodically independently emit the beacon signal, *i.e.,* the tag may be configured to emit the beacon signal in a regular (or irregular) interval.

However, in embodiments, the control system may be configured to (have a signal generating element) emit a tracking signal, wherein the tag emits the beacon signal upon detecting the tracking signal. In such embodiments, the control system may be enabled to locate the tag at any moment, which may be beneficial if the location of the tag may need to be determined at short notice, such as, for example, to quickly locate a specialist in a hospital or in a factory.

In further embodiments, the tag may comprises an RFID tag, especially a passive RFID tag, wherein the tracking signal comprises an electromagnetic interrogation pulse selected to trigger the RFID tag, such that the RFID tag emits the beacon signal.

In embodiments, the plurality of listener nodes may comprise l₀ listener nodes, especially wherein l₀ ≥ 10. In further embodiments, the related proper subset, especially each related proper subset, comprises l₁ listener nodes. Hence, a listener node for which the related proper subset comprises l₁ listener nodes may announce the (respective) measurement signal to l₁ other listener nodes. In further embodiments, l₁ may be independently selected for each related proper subset.

In further embodiments, l₁ ≥ 1, such as l₁ ≥ 2, especially l₁ ≥ 3. In further embodiments, l₁/l₀ ≤ 0.75, such as l₁/l₀ ≤ 0.5, especially l₁/l₀ ≤ 0.4, such as l₁/l₀ ≤ 0.3, especially l₁/l₀ ≤ 0.2, such as l₁/l₀ ≤ 0.1. Hence, the related proper subset for the listener node, especially for each listener node, may comprise at least 1 other listener node, such as at least three other listener nodes. Further, in embodiments, the related proper subset may comprise at most three quarters of the plurality of listener nodes, such as at most half of the plurality of listener nodes.

In further embodiments, the one or more reporting listener nodes may comprise l₂ listener nodes. Hence, l₂ listener nodes may be elected to be reporting listener nodes. In further embodiments, l₂ ≥ 1, such as ≥ 2. In further embodiments l₂ ≤ 10, such as ≤ 6. In particular, in further embodiments, l₂/l₀ ≤ 0.4, such as l₂/l₀ ≤ 0.2, especially l₂/l₀ ≤ 0.1, such as l₂/l₀ ≤ 0.05. Hence, only a relatively small proportion of the plurality of listener nodes may be selected as the one or more reporting listener nodes, which may beneficially reduce the amount of data traffic towards the control system.

In further embodiments, the announcing listeners nodes, *i.e.,* the listener nodes that announce their measurement data, may comprise l₃ listener nodes. In further embodiments, l₃/l₀ ≤ 0.75, such as l₃/l₀ ≤ 0.5, especially l₃/l₀ ≤ 0.4, such as l₃/l₀ ≤ 0.3, especially l₃/l₀ ≤ 0.2, such as l₃/l₀ ≤ 0.1. In further embodiments, l₂/l₃ ≤ 0.4, such as l₂/l₃ ≤ 0.2, especially l₂/l₃ ≤ 0.1, such as l₂/l₃ ≤ 0.05.

In embodiments, at least part of the plurality of listener nodes may be comprised by a mesh network. Hence, in embodiments, the plurality of listener nodes may be connected via a mesh network.

The tracking of the tag may partially depend on a density of listener nodes in the space in which the tag is tracked. Hence, in embodiments, the listener nodes may be arranged in a grid, wherein each listener node is arranged at a distance of at most 50 meters, such as at most 20 meters, especially at most 10 meters, such as at most 5 meters, from a closest other listener node of the plurality of listener nodes.

Phrases like "in the operational mode, the control system may select one or more reporting listeners", or "in the operational mode, the control system selects one or more reporting listener", or "in the operational mode, the control system executes a (step of a) method", or "in the operational mode, the control system may execute a method", and similar phrases, may also in embodiments be read that the control system is configured to perform the indicated action (in an operational mode), such as configured to select one or more reporting listeners in an operational mode, or configured to execute a (step of a) method in an operational mode.

In a further aspect, the invention provides a method for localizing an (emission) location of a beacon signal (of a tag) in a space, wherein a plurality of listener nodes are arranged in the space, and especially wherein the listener nodes are configured to detect the beacon signal. Further, location data of the plurality of listener nodes may be available. The method may comprise a detection stage, an announcement stage, a reporter selection stage, a reporting stage and/or a localization stage.

The phrase "method for localizing a beacon signal", and similar phrases, may also in embodiments be interpreted as a method for localizing a tag (that emits the beacon signal).

The method, especially the detection stage, may comprise detecting the beacon signal with a detecting subset of listener nodes. In embodiments, each listener node in the detecting subset may: determine a signal property of the beacon signal; and determine an announcement delay based on the signal property.

The method, especially the announcement stage, may further comprise, each listener node in the detecting subset announcing a measurement signal, especially a measurement signal comprising the signal property, after the announcement delay to a related proper subset of the plurality of listener nodes unless the listener node has received a predetermined signal, especially a predetermined number of measurement signals.

The method, especially the reporter selection stage, may comprise selecting one or more reporting listener nodes from the plurality of listener nodes, especially wherein the one or more reporting listener nodes are a proper subset of the listener nodes.

The method, especially the reporting stage, may comprise providing an aggregate signal from the one or more reporting listener nodes, especially wherein the aggregate signal comprises data related to a plurality of measurement signals (received by the one or more reporting listener nodes).

The method, especially the localization stage, may comprise determining the (emission) location based on the aggregate signal and the location data of the plurality of listener nodes.

Hence, in specific embodiments, a plurality of listener nodes may be arranged in the space, wherein the listener nodes are configured to detect the beacon signal, and wherein the method comprises: detecting the beacon signal with a detecting subset of listener nodes; wherein each listener node in the detecting subset: (i) determines a signal property of the beacon signal; (ii) determines an announcement delay based on the signal property; and (iii) announces a measurement signal after the announcement delay to a related proper subset of the plurality of listener nodes unless the listener node has received a predetermined number of measurement signals; selecting one or more reporting listener nodes from the plurality of listener nodes, wherein the one or more reporting listener nodes are a proper subset of the listener nodes; providing an aggregate signal from the one or more reporting listener nodes, wherein the aggregate signal comprises data related to a plurality of measurement signals; and determining the (emission) location based on the aggregate signal and location data of the plurality of listener nodes.

In embodiments, the signal property may comprise a signal strength or a signal quality, and the announcement delay may be (selected to) be negatively proportional to the signal property, especially to the signal strength, and/or especially to the signal quality. In embodiments, the announcement delay may especially be (selected to be) inversely proportional to the signal property.

In further embodiments, the signal property may comprise a distance estimate, and the announcement delay may be (selected to be) proportional to the signal property, especially to the distance estimate.

In embodiments, (at least part of) the listener nodes may be integrated in lighting devices. The lighting devices may especially be arranged to illuminate at least part of the space.

In embodiments, the method may comprise selecting the reporting listener nodes based on the measurement delays of the listener nodes in the detecting subset, wherein each listener node in the detecting subset announces to be a reporting listener when the listener announces its measurement signal having received exactly a predefined number n₂ of measurement signals from the related proper subset, especially wherein n₂ is selected from the range of 0-10, more especially wherein n₂=0, or more especially wherein n₂=n₁-1. In aspects, the second predefined n₂ number may also be at least one number selected from the range of 0-10, for example n₂=0 and/or n₂=n₁-1

In further embodiments, the method may comprise selecting the one or more reporting listener nodes based on the location data. In further embodiments, the one or more reporting listener nodes may comprise at least a first reporting listener node and a second reporting listener node, wherein the first reporting listener node has a first related proper subset, and wherein the second reporting listener node has a second related proper subset, and wherein the first related proper subset and the second related proper subset overlap for at most 50% (with respect to comprised listener nodes), such as at most 40%, especially at most 30%, such as at most 20%, especially at most 10%.

In a further aspect, the invention may provide a lighting device comprising at least one of the listener nodes as defined herein for use in the asset-tracking system as defined herein. In specific embodiments, the (above described) method for localizing an (emission) location of a beacon signal (of a tag) in a space may use such lighting device.

In embodiments, the lighting device may comprise a light generating device, a light control element, or a (proximity) sensor, especially a light generating device, more especially a luminaire.

The lighting device may be part of or may be applied in e.g. office lighting systems, household application systems, shop lighting systems, home lighting systems, accent lighting systems, spot lighting systems, theater lighting systems, fiber-optics application systems, projection systems, self-lit display systems, pixelated display systems, segmented display systems, warning sign systems, medical lighting application systems, indicator sign systems, decorative lighting systems, portable systems, automotive applications, green house lighting systems, horticulture lighting, etc..

In a specific embodiment, the light source comprises a solid state LED light source (such as a LED or laser diode).

The term "light source" may also relate to a plurality of light sources, such as 2-20 (solid state) LED light sources. Hence, the term LED may also refer to a plurality of LEDs.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Fig.1 schematically depicts an embodiment of the asset-tracking system;
Fig. 2 schematically depicts an embodiment of the asset-tracking system;
Fig. 3 schematically depicts an embodiment of the asset-tracking system. The schematic drawings are not necessarily on scale.

### DETAILED DESCRIPTION OF THE EMBODIMENTS

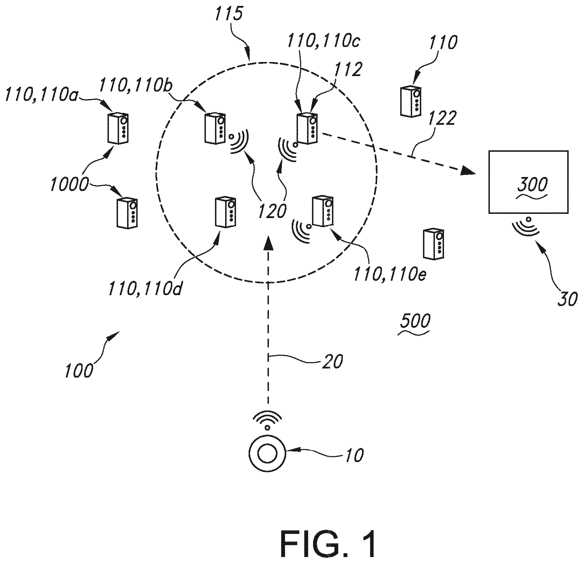

Fig. 1 schematically depicts an embodiment of the asset-tracking system 100 for tracking a tag 10 in a space 500, especially wherein the tag 10 periodically emits a beacon signal 20. In the depicted embodiment, the asset-tracking system 100 comprises a plurality of listener nodes 110 arranged in the space 500 and configured to detect the beacon signal 20, and a control system 300, wherein the control system 300 has access to location data of the plurality of listener nodes 110. In embodiments, the asset-tracking system has an operational mode comprising one or more of a detection stage, an announcement stage, a reporter selection stage, a reporting stage, and a localization stage.

In embodiments, in the detection stage, each listener node 110 of the plurality of listener nodes 110 determines a signal property upon detecting the beacon signal 20, especially wherein the listener node 110 determines an announcement delay based on the signal property. In particular, a detecting subset 115 of the listener nodes 110 detect the beacon signal 20. Each listener node 110 in the detecting subset determines a (related) signal property, and especially determines a (respective) announcement delay based on the signal property. In the depicted embodiment, the detecting subset 115 comprises four listener nodes 110, including listener nodes 110b, 110c, 110d and 110e, but excluding listener node 110a.

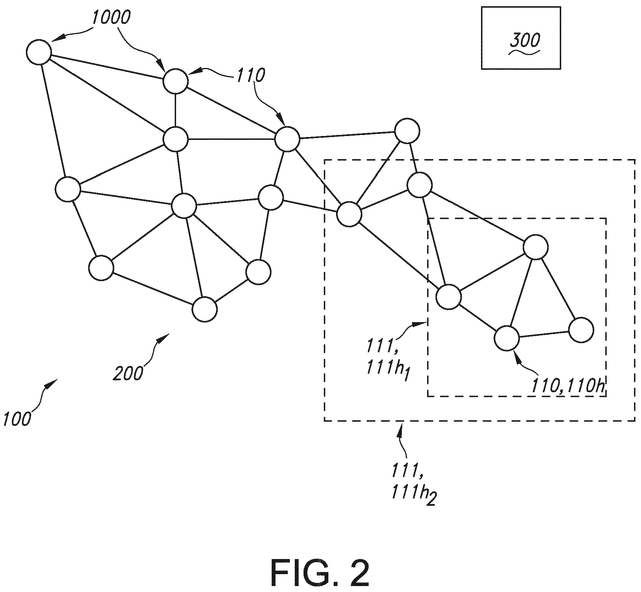

In embodiments, in the announcement stage, each listener node 110 announces a measurement signal 120 after the announcement delay to a related proper subset 111 (see Fig. 2) of the plurality of listener nodes 110 unless the listener node 110 has received a predetermined number n₁ of measurement signals 120. In particular, an announcing subset of listener nodes announces the (respective) measurement signal. In the depicted embodiment, for each of the four listener nodes 110 in the detecting subset 115 the other listener nodes 110 in the detecting subset 115 may be part of the (respective) related proper subset. Further, in the depicted embodiment, for each listener node 110 n₁ may be equal to three. Hence at most three of the listener nodes 110 in the detecting subset 115 will announce a measurement signal. Specifically, in the depicted embodiment, listener nodes 110b and 110c announce a measurement signal 120, whereas listener node 120d does not. Hence, the signal property determined by listener nodes 110b, 110c and 110e may be more informative with respect to the location of the tag 10 than the signal property determined by listener node 110d as listener nodes 110b, 110c and 110e determined smaller measurement delays based on the (respective) signal property than listener node 110d.

In embodiments, in the reporter selection stage, one or more reporting listener nodes 112 are selected from the plurality of listener nodes 110, especially from the detecting subset 115, more especially from the announcing subset, wherein the one or more reporting listener nodes 112 are a proper subset of the plurality of listener nodes 110. In the depicted embodiment, a single reporting listener node 112 is selected; listener node 110c.

In embodiments, in the reporting stage, the one or more reporting listener nodes 112, here listener node 110c, provide an aggregate signal 122 to the control system 300, especially wherein the aggregate signal 122 comprises data related to a plurality of measurement signals 120. In the depicted embodiment, the aggregate signal 122 may comprise data related to the measurement signals 120 of listener nodes 110b, 110c and 110e, especially data related to the measurement signals 120 of each of listener nodes 110b, 110c and 110e.

In embodiments, in the localization stage, the control system 300 may determine a location of the tag 10 based on the aggregate signal 122 and the location data.

In further embodiments, the control system may further take into account of which listener nodes no signal property was reported in order to determine the location of the tag. In particular, it may be unlikely that the tag is close to a listener node that did not announce a measurement signal.

In the operational mode, each listener node 110 that announces its measurement signal 120 to the related proper subset 111 having received exactly a second predefined number n₂ of measurement signals from the related proper subset is selected as one of the one or more reporting listener nodes 112, wherein n₂ is selected from the range of 0-10.

In embodiments, in the operational mode, each listener node that announces its measurement signal to the related proper subset having received exactly a second predefined number n₂ of measurement signals from the related proper subset is selected as one of the one or more reporting listener nodes 112, wherein n₂ may be of at least one number that is selected from the range of 0-10.

In further embodiments, in the operational mode, the control system 300 may select the one or more reporting listener nodes 112, especially (at least partially) based on the location data.

In the depicted embodiment, the asset-tracking system 100, especially the control system 300, may be configured to (periodically) emit a tracking signal 30, wherein the tag 10 emits the beacon signal 20 upon detecting the tracking signal 30.

Fig. 1 further schematically depicts an embodiment of the method for localizing a location 15 of a beacon signal 20 in a space 500, wherein a plurality of listener nodes 110 are arranged in the space 500, and wherein the listener nodes 110 are configured to detect the beacon signal 20. The method may especially comprise a detection stage, an announcement stage, a reporter selection stage, a reporting stage, and a localization stage.

In embodiments, the method, especially in the detection stage, may comprise detecting the beacon signal 20 with a detecting subset 115 of listener nodes 110; wherein each listener node 110 in the detecting subset 115: (i) determines a signal property of the beacon signal 20; and (ii) determines an announcement delay based on the signal property.

In embodiments, the method, especially in the announcement stage, may comprise announcing a measurement signal 120 with each listener node 110 in the detecting subset 115 after the announcement delay to a related proper subset 111 of the plurality of listener nodes 110 unless the (respective) listener node 110 has received a predetermined number of measurement signals 120 (prior to expiration of the announcement delay, *i.e.,* the announcement stage may comprise each listener node 110 in the detecting subset 115 announcing a measurement signal 120 after the announcement delay to a related proper subset 111 of the plurality of listener nodes 110 unless the listener node 110 has received a predetermined number of measurement signals 120.

In embodiments, the method, especially in the reporter selection stage, may comprise selecting one or more reporting listener nodes 112 from the plurality of listener nodes 110, especially wherein the one or more reporting listener nodes 112 are a proper subset of the listener nodes 110.

In embodiments, the method, especially in the reporting stage, may comprise providing an aggregate signal 122 from the one or more reporting listener nodes 112, wherein the aggregate signal 122 comprises data related to a plurality of measurement signals 120.

In embodiments, the method, especially in the localization stage, may comprise determining the location 15 based on the aggregate signal 122 and location data of the plurality of listener nodes 110.

In the depicted embodiment, (at least part of) the listener nodes 110 are integrated in lighting devices 1000.

In embodiments, the method may comprise selecting the reporting listener nodes 112 based on the measurement delays of the listener nodes 110 in the detecting subset 115, wherein each listener node 110 in the detecting subset 115 announces to be a reporting listener 112 when the listener node 110 announces its measurement signal 120 having received exactly a predefined number n₂ of measurement signals 120 from the related proper subset 115, wherein n₂ is selected from the range of 0-10. Hence, for example, with regards to the depicted embodiment, n₂ may be 0, implying that listener node 110c was the first listener node 110 to announce the measurement signal 120. Similarly, n₂ may be equal to n₁-1, implying that listener node 110c was the last listener node 110 to announce the measurement signal 120. In aspects, n₂ may be at least one number selected from the range of 0-10. For example, n₂ may be 0 and/or 10.

In embodiments, n₂ may be independently selected from the range of 0-10 for each listener node. In further embodiments, n₂ may be the same for each listener node.

In embodiments, the control system may set the second predefined number n₂ for a listener node, for example for each one of the plurality of listener nodes.

In further embodiments, the method may comprise selecting the one or more reporting listener nodes 112 based on the location data and/or previous measurement signals 120 from the plurality of listener nodes 112.

Fig. 2 schematically depicts an embodiment of the asset-tracking system 100, wherein at least part of the plurality of listener nodes 110 are comprised by a mesh network 200. In particular, each node in the mesh network 200 may represent a lighting device 1000 comprising a listener node 110. Hence, in the depicted embodiment, (at least part of) the listener nodes 110 are integrated in lighting devices 1000.

Each edge between two nodes in the mesh network 200 indicates that the respective nodes can communicate directly, *i.e.,* connected nodes are arranged at a hop distance of 1. Hence, for a hop distance of 1, the related proper subset 111 of listener node 110h comprises all other listener nodes 110 within the one-hop related proper subset 111h₁, which are three listener nodes 110. Similarly, for a hop distance of 2, the related proper subset 111 of listener node 110h comprises all other listener nodes 110 within the two-hop related proper subset 111h₂, which are 5 other listener nodes 110.

Hence, in embodiments, the related proper subset 111 for each listener node 110 comprises all listener nodes 110 of the plurality of listener nodes 110 that can be reached from the listener node 110 in n hops, wherein n is selected from the range of 1-4, such as from the range of 1-2, especially wherein n=1, or especially wherein n=2.

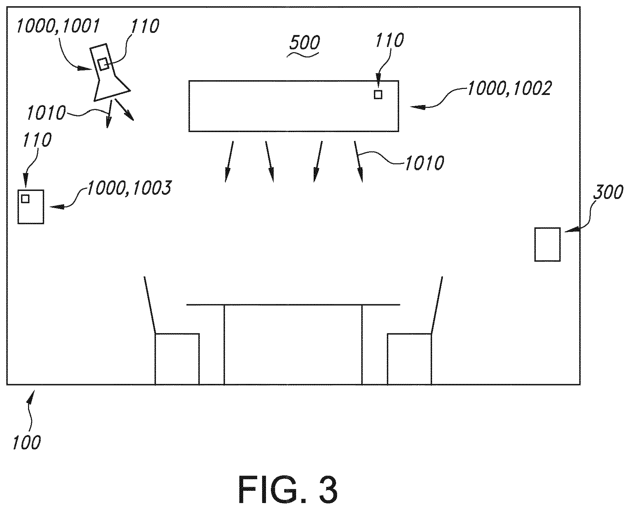

Fig. 3 schematically depicts another embodiment of the asset-tracking system 100, wherein the listener nodes 110 are integrated in lighting devices 1000. In particular, Fig. 3 schematically depicts lighting devices 1000 comprising light generating devices, such as a lamp 1001, and a luminaire 1002, and a lighting control element 1003, such as a user interface, like a graphical user interface. Reference 1010 indicates the light that is generated by a lighting device 1000. Especially, this light is visible light, such as white light. The lighting control element 1003 may also be a portable device, such as an I-phone or Smartphone.

Fig. 3 also schematically depicts an embodiment of the lighting device 1000, wherein the lighting device 1000 comprises at least one of the listener nodes 110 of the invention for use in the asset-tracking system of the invention.

The term "plurality" refers to two or more. Furthermore, the terms "a plurality of" and "a number of" may be used interchangeably.

The terms "substantially" or "essentially" herein, and similar terms, will be understood by the person skilled in the art. The terms "substantially" or "essentially" may also include embodiments with "entirely", "completely", "all", etc. Hence, in embodiments the adjective substantially or essentially may also be removed. Where applicable, the term "substantially" or the term "essentially" may also relate to 90% or higher, such as 95% or higher, especially 99% or higher, even more especially 99.5% or higher, including 100%. Moreover, the terms "about" and "approximately" may also relate to 90% or higher, such as 95% or higher, especially 99% or higher, even more especially 99.5% or higher, including 100%. For numerical values it is to be understood that the terms "substantially", "essentially", "about", and "approximately" may also relate to the range of 90% - 110%, such as 95%-105%, especially 99%-101% of the values(s) it refers to.

The term "comprise" also includes embodiments wherein the term "comprises" means "consists of".

The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices, apparatus, or systems may herein amongst others be described during operation. As will be clear to the person skilled in the art, the invention is not limited to methods of operation, or devices, apparatus, or systems in operation.

The term "further embodiment" and similar terms may refer to an embodiment comprising the features of the previously discussed embodiment, but may also refer to an alternative embodiment.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim.

Use of the verb "to comprise" and its conjugations does not exclude the presence of elements or steps other than those stated in a claim. Unless the context clearly requires otherwise, throughout the description and the claims, the words "comprise", "comprising", "include", "including", "contain", "containing" and the like are to be construed in an inclusive sense as opposed to an exclusive or exhaustive sense; that is to say, in the sense of "including, but not limited to".

The article "a" or "an" preceding an element does not exclude the presence of a plurality of such elements.

The invention may be implemented by means of hardware comprising several distinct elements, and by means of a suitably programmed computer. In a device claim, or an apparatus claim, or a system claim, enumerating several means, several of these means may be embodied by one and the same item of hardware. The mere fact that certain measures are recited in mutually different dependent claims does not indicate that a combination of these measures cannot be used to advantage.

The invention also provides a control system that may control the device, apparatus, or system, or that may execute the herein described method or process. Yet further, the invention also provides a computer program product, when running on a computer which is functionally coupled to or comprised by the device, apparatus, or system, controls one or more controllable elements of such device, apparatus, or system.

The term "controlling" and similar terms herein especially refer at least to determining the behavior or supervising the running of an element. Hence, herein "controlling" and similar terms may e.g. refer to imposing behavior to the element (determining the behavior or supervising the running of an element), etc., such as e.g. measuring, displaying, actuating, opening, shifting, changing temperature, etc.. Beyond that, the term "controlling" and similar terms may additionally include monitoring. Hence, the term "controlling" and similar terms may include imposing behavior on an element and also imposing behavior on an element and monitoring the element. The controlling of the element can be done with a control system. The control system and the element may thus at least temporarily, or permanently, functionally be coupled. The element may comprise the control system. In embodiments, the control system and the element may not be physically coupled. Control can be done via wired and/or wireless control. The term "control system" may also refer to a plurality of different control systems, which especially are functionally coupled, and of which e.g. one control system may be a control system and one or more others may be slave control systems.

The invention further applies to a device, apparatus, or system comprising one or more of the characterizing features described in the description and/or shown in the attached drawings. The invention further pertains to a method or process comprising one or more of the characterizing features described in the description and/or shown in the attached drawings. Moreover, if a method or an embodiment of the method is described being executed in a device, apparatus, or system, it will be understood that the device, apparatus, or system is suitable for or configured for (executing) the method or the embodiment of the method respectively.

The various aspects discussed in this patent can be combined in order to provide additional advantages. Further, the person skilled in the art will understand that embodiments can be combined, and that also more than two embodiments can be combined. Furthermore, some of the features can form the basis for one or more divisional applications.

Amongst others, the invention involves a collaborative system and may include at least two steps. In a first step, listeners near a transmitting tag, are informing and negotiating among themselves. Further, top listeners may be selected in a distributed manner based on the measurement they have individually. In a second step, the measurement results of all the selected listeners are sent individually by the selected listeners or sent by one or more reporting listeners that can be selected already in the first step. The destination of the reports may be the gateway for the network.

## Claims

1. An asset-tracking system (100) for tracking a tag (10) in a space (500), wherein the tag (10) periodically emits a beacon signal (20), wherein the asset-tracking system (100) comprises a plurality of listener nodes (110) arranged in the space (500) and configured to detect the beacon signal (20), and wherein the asset-tracking system (100) comprises a control system (300), wherein the control system (300) has access to location data of the plurality of listener nodes (110), wherein in an operational mode:
- each listener node (110) of the plurality of listener nodes (110) determines a signal property upon detecting the beacon signal (20), wherein the listener node (110) determines an announcement delay based on the signal property;
- each listener node (110) announces a measurement signal (120) after the announcement delay to a related proper subset (111) of the plurality of listener nodes (110) unless the listener node (110) has received a predetermined number n₁ of measurement signals (120);
- one or more reporting listener nodes (112) are selected from the plurality of listener nodes (110), wherein the one or more reporting listener nodes (112) are a proper subset of the plurality of listener nodes (110);
wherein each listener node (110) that announces its measurement signal to the related proper subset (111) having received exactly a second predefined number n₂ of measurement signals from the related proper subset (111), at the moment of announcing, is selected as one of the one or more reporting listener nodes (112), wherein n₂ is selected from the range of 0-10;
- the one or more reporting listener nodes (112) provide an aggregate signal (122) to the control system (300), wherein the aggregate signal (122) comprises data related to a plurality of measurement signals (120);
- the control system (300) determines a location of the tag (10) based on the aggregate signal (122) and the location data.

2. The asset-tracking system (100) according to claim 1, wherein the signal property is selected from the group consisting of a signal strength, a signal quality, a distance estimate, an angle estimate, and a phase estimate.

3. The asset-tracking system (100) according to claim 2, wherein:
- the signal property comprises the signal strength or the signal quality, and wherein the announcement delay is selected to be negatively proportional to the signal property; or
- the signal property comprises the distance estimate, and the announcement delay is selected to be proportional to the signal property.

4. The asset-tracking system (100) according to any one of the preceding claims, wherein n₂ is 0.

5. The asset-tracking system (100) according to any one of the preceding claims 1-3, wherein n₂ is n₁ - 1.

6. The asset-tracking system (100) according to any one of the preceding claims, wherein the related proper subset (111) for each listener node (110) comprises all listener nodes (110) of the plurality of listener nodes (110) that can be reached from the listener node (110) in n hops, wherein n is selected from the range of 1-2.

7. The asset-tracking system (100) according to any one of the preceding claims, wherein the listener nodes (110) are integrated in lighting devices (1000).

8. The asset-tracking system (100) according to any one of the preceding claims, wherein the plurality of listener nodes (110) comprises l₀ listener nodes (110), wherein l₀ ≥ 10, and wherein the related proper subset (111) comprises l₁ listener nodes (110), wherein l₁ ≥ 1, and wherein l₁/l₀ ≤ 0.5, and wherein the one or more reporting listener nodes (112) comprise l₂ listener nodes (110), wherein, l₂ ≥ 1, and wherein l₂/l₀ ≤ 0.2.

9. The asset-tracking system (100) according to any one of the preceding claims, wherein at least part of the plurality of listener nodes (110) are comprised by a mesh network (200).

10. A method for tracking a location (15) of a tag (10) in a space (500), wherein the tag (10) periodically emits a beacon signal (20), wherein a plurality of listener nodes (110) are arranged in the space (500), wherein the listener nodes (110) are configured to detect the beacon signal (20), wherein a control system (300) has access to location data of the plurality of listener nodes (110), wherein the method comprises:
- detecting the beacon signal (20) with a detecting subset (115) of listener nodes (110); wherein each listener node (110) in the detecting subset (115):
- determines a signal property of the beacon signal (20);
- determines an announcement delay based on the signal property;
- announces a measurement signal (120) after the announcement delay to a related proper subset (111) of the plurality of listener nodes (110) unless the listener node (110) has received a predetermined number of measurement signals (120);
- selecting one or more reporting listener nodes (112) from the plurality of listener nodes (110), wherein the one or more reporting listener nodes (112) are a proper subset of the listener nodes (110);
wherein each listener node (110) that announces its measurement signal to the related proper subset (111) having received exactly a second predefined number n₂ of measurement signals from the related proper subset (111), at the moment of announcing, is selected as one of the one or more reporting listener nodes (112), wherein n₂ is selected from the range of 0-10;
- providing an aggregate signal (122) from the one or more reporting listener nodes (112) to the control system (300), wherein the aggregate signal (122) comprises data related to a plurality of measurement signals (120);
- the control system (300) determining the location (15) of the tag (10) based on the aggregate signal (122) and location data of the plurality of listener nodes (110).

11. The method according to claim 10, wherein:
- the signal property comprises a signal strength or a signal quality, and the announcement delay is negatively proportional to the signal property; or
- the signal property comprises a distance estimate, and the announcement delay is proportional to the signal property.

12. The method according to any one of the preceding claims 10-11, wherein the listener nodes (110) are integrated in lighting devices (1000).

13. The method according to any one of the preceding claims 10-12, wherein the plurality of listener nodes (110) comprises l₀ listener nodes (110), wherein l₀ ≥ 10, and wherein the related proper subset (111) comprises n₁ listener nodes (110), wherein l₁ ≥ 1, and wherein l₁/l₀ ≤ 0.5, and wherein the one or more reporting listener nodes (112) comprises l₂ listener nodes (110), wherein l₂ ≥ 1, and wherein l₂/l₀ ≤ 0.2.

14. A lighting device (1000) comprising at least one of the listener nodes (110) for use in the asset-tracking system (100) according to any one of the preceding claims 1-9.

## Patentansprüche

1. Asset-Verfolgungssystem (100) zum Verfolgen eines Markers (10) in einem Raum (500), wobei der Marker (10) periodisch ein Bakensignal (20) emittiert, wobei das Asset-Verfolgungssystem (100) eine Vielzahl von Hörerknoten (110), die in dem Raum (500) angeordnet und konfiguriert sind, um das Bakensignal (20) zu erkennen, umfasst, und wobei das Asset-Verfolgungssystem (100) ein Steuersystem (300) umfasst, wobei das Steuersystem (300) Zugriff auf Positionsdaten der Vielzahl von Hörerknoten (110) aufweist, wobei in einem Betriebsmodus:
- jeder Hörerknoten (110) der Vielzahl von Hörerknoten (110) eine Signaleigenschaft bei dem Erkennen des Bakensignals (20) bestimmt, wobei der Hörerknoten (110) eine Ankündigungsverzögerung basierend auf der Signaleigenschaft bestimmt;
- jeder Hörerknoten (110) ein Messsignal (120) nach der Ankündigungsverzögerung an eine zugehörige geeignete Teilmenge (111) der Vielzahl von Hörerknoten (110) ankündigt, es sei denn, der Hörerknoten (110) hat eine zuvor bestimmte Anzahl n₁ von Messsignalen (120) empfangen;
- ein oder mehrere berichtende Hörerknoten (112) aus der Vielzahl von Hörerknoten (110) ausgewählt sind, wobei der eine oder die mehreren berichtenden Hörerknoten (112) eine geeignete Teilmenge der Vielzahl von Hörerknoten (110) sind;
wobei jeder Hörerknoten (110), der sein Messsignal an die zugehörige geeignete Teilmenge (111) ankündigt, wobei er genau eine zweite zuvor definierte Anzahl n₂ von Messsignalen aus der zugehörigen geeigneten Teilmenge (111) empfangen hat, zu dem Moment der Ankündigung, als einer des einen oder der mehreren berichtenden Hörerknoten (112) ausgewählt ist, wobei n₂ aus dem Bereich von 0-10 ausgewählt ist;
- der eine oder die mehreren berichtenden Hörerknoten (112) dem Steuersystem (300) ein aggregiertes Signal (122) bereitstellen, wobei das aggregierte Signal (122) Daten, die zu einer Vielzahl von Messsignalen (120) gehören, umfasst;
- das Steuersystem (300) eine Position des Markers (10) basierend auf dem aggregierten Signal (122) und den Positionsdaten bestimmt.

2. Asset-Verfolgungssystem (100) nach Anspruch 1, wobei die Signaleigenschaft aus der Gruppe ausgewählt ist, bestehend aus einer Signalstärke, einer Signalqualität, einer Entfernungsschätzung, einer Winkelschätzung und einer Phasenschätzung.

3. Asset-Verfolgungssystem (100) nach Anspruch 2, wobei:
- die Signaleigenschaft die Signalstärke oder die Signalqualität umfasst, und wobei die Ankündigungsverzögerung ausgewählt ist, um zu der Signaleigenschaft negativ proportional zu sein; oder
- die Signaleigenschaft die Entfernungsschätzung umfasst und die Ankündigungsverzögerung ausgewählt ist, um zu der Signaleigenschaft proportional zu sein.

4. Asset-Verfolgungssystem (100) nach einem der vorstehenden Ansprüche, wobei n₂ 0 ist.

5. Asset-Verfolgungssystem (100) nach einem der vorstehenden Ansprüche 1 bis 3, wobei n₂ n₁ - 1 ist.

6. Asset-Verfolgungssystem (100) nach einem der vorstehenden Ansprüche, wobei die zugehörige geeignete Teilmenge (111) für jeden Hörerknoten (110) alle Hörerknoten (110) der Vielzahl von Hörerknoten (110), die von dem Hörerknoten (110) in n Hops erreicht werden können, umfasst, wobei n aus dem Bereich von 1-2 ausgewählt ist.

7. Asset-Verfolgungssystem (100) nach einem der vorstehenden Ansprüche, wobei die Hörerknoten (110) in Beleuchtungsvorrichtungen (1000) integriert sind.

8. Asset-Verfolgungssystem (100) nach einem der vorstehenden Ansprüche, wobei die Vielzahl von Hörerknoten (110) l₀ Hörerknoten (110) umfasst, wobei l₀≥ 10, und wobei die zugehörige geeignete Teilmenge (111) l₁ Hörerknoten (110) umfasst, wobei l₁≥ 1, und wobei l₁/l₀≤ 0,5, und wobei der eine oder die mehreren berichtenden Hörerknoten (112) l₂ Hörerknoten (110) umfassen, wobei l₂≥ 1, und wobei l₂/l₀≤ 0,2.

9. Asset-Verfolgungssystem (100) nach einem der vorstehenden Ansprüche, wobei mindestens ein Teil der Vielzahl von Hörerknoten (110) durch ein Maschennetz (200) umschlossen sind.

10. Verfahren zum Verfolgen einer Position (15) eines Markers (10) in einem Raum (500), wobei der Marker (10) periodisch ein Bakensignal (20) emittiert, wobei eine Vielzahl von Hörerknoten (110) in dem Raum (500) angeordnet sind, wobei die Hörerknoten (110) konfiguriert sind, um das Bakensignal (20) zu erkennen, wobei ein Steuersystem (300) Zugriff auf Positionsdaten der Vielzahl von Hörerknoten (110) aufweist, wobei das Verfahren umfasst:
- Erkennen des Bakensignals (20) mit einer erkennenden Teilmenge (115) von Hörerknoten (110); wobei jeder Hörerknoten (110) in der erkennenden Teilmenge (115):
- eine Signaleigenschaft des Bakensignals (20) bestimmt;
- eine Ankündigungsverzögerung basierend auf der Signaleigenschaft bestimmt;
- ein Messsignal (120) nach der Ankündigungsverzögerung an eine zugehörige geeignete Teilmenge (111) der Vielzahl von Hörerknoten (110) ankündigt, es sei denn, der Hörerknoten (110) hat eine zuvor bestimmte Anzahl von Messsignalen (120) empfangen;
- Auswählen eines oder mehrerer berichtender Hörerknoten (112) aus der Vielzahl von Hörerknoten (110), wobei der eine oder die mehreren berichtenden Hörerknoten (112) eine geeignete Teilmenge der Hörerknoten (110) sind;
wobei jeder Hörerknoten (110), der sein Messsignal an die zugehörige geeignete Teilmenge (111) ankündigt, wobei er genau eine zweite zuvor definierte Anzahl n₂ von Messsignalen aus der zugehörigen geeigneten Teilmenge (111) empfangen hat, zu dem Moment der Ankündigung, als einer des einen oder der mehreren berichtenden Hörerknoten (112) ausgewählt ist, wobei n₂ aus dem Bereich von 0-10 ausgewählt ist;
- Bereitstellen eines aggregierten Signals (122) von dem einen oder den mehreren berichtenden Hörerknoten (112) dem Steuersystem (300), wobei das aggregierte Signal (122) Daten, die zu einer Vielzahl von Messsignalen (120) gehören, umfasst;
- wobei das Steuersystem (300) die Position (15) des Markers (10) basierend auf dem aggregierten Signal (122) und den Positionsdaten der Vielzahl von Hörerknoten (110) bestimmt.

11. Verfahren nach Anspruch 10, wobei:
- die Signaleigenschaft eine Signalstärke oder eine Signalqualität umfasst und die Ankündigungsverzögerung zu der Signaleigenschaft negativ proportional ist; oder
- die Signaleigenschaft eine Entfernungsschätzung umfasst und die Ankündigungsverzögerung zu der Signaleigenschaft proportional ist.

12. Verfahren nach einem der vorstehenden Ansprüche 10 bis 11, wobei die Hörerknoten (110) in Beleuchtungsvorrichtungen (1000) integriert sind.

13. Verfahren nach einem der Ansprüche 10 bis 12, wobei die Vielzahl von Hörerknoten (110) l₀ Hörerknoten (110) umfasst, wobei l₀≥ 10, und wobei die zugehörige geeignete Teilmenge (111) l₁ Hörerknoten (110) umfasst, wobei l₁≥ 1, und wobei l₁/l₀≤ 0,5, und wobei der eine oder die mehreren berichtenden Hörerknoten (112) l₂ Hörerknoten (110) umfassen, wobei l₂≥ 1, und wobei l₂/l₀≤ 0,2.

14. Beleuchtungsvorrichtung (1000), umfassend mindestens einen der Hörerknoten (110) zur Verwendung in dem Asset-Verfolgungssystem (100) nach einem der vorstehenden Ansprüche 1 bis 9.

## Revendications

1. Système de suivi de bien (100) permettant de suivre une étiquette (10) dans un espace (500), dans lequel l'étiquette (10) émet périodiquement un signal de balise (20), dans lequel le système de suivi de bien (100) comprend une pluralité de nœuds d'écoute (110) agencés dans l'espace (500) et configurés pour détecter le signal de balise (20), et dans lequel le système de suivi de bien (100) comprend un système de commande (300), dans lequel le système de commande (300) a accès à des données de localisation de la pluralité de nœuds d'écoute (110), dans lequel dans un mode fonctionnel :
- chaque nœud d'écoute (110) de la pluralité de nœuds d'écoute (110) détermine une propriété de signal lors de la détection du signal de balise (20), dans lequel le nœud d'écoute (110) détermine un retard d'annonce en fonction de la propriété de signal ;
- chaque nœud d'écoute (110) annonce un signal de mesure (120) après le retard d'annonce à un sous-ensemble adéquat apparenté (111) de la pluralité de nœuds d'écoute (110) à moins que le nœud d'écoute (110) n'ait reçu un nombre prédéterminé n₁ de signaux de mesure (120) ;
- un ou plusieurs nœuds d'écoute rapporteurs (112) sont sélectionnés parmi la pluralité de nœuds d'écoute (110), dans lequel le ou les nœuds d'écoute rapporteurs (112) sont un sous-ensemble adéquat de la pluralité de nœuds d'écoute (110) ;
dans lequel chaque nœud d'écoute (110) qui annonce son signal de mesure au sous-ensemble adéquat apparenté (111) ayant reçu exactement un second nombre prédéfini n₂ de signaux de mesure en provenance du sous-ensemble adéquat apparenté (111), au moment de l'annonce, est sélectionné en tant que l'un parmi le ou les nœuds d'écoute rapporteurs (112), dans lequel n₂ est sélectionné dans la plage de 0 à 10 ;
- le ou les nœuds d'écoute rapporteurs (112) fournissent un signal agrégé (122) au système de commande (300), dans lequel le signal agrégé (122) comprend des données apparentées à une pluralité de signaux de mesure (120) ;
- le système de commande (300) détermine une localisation de l'étiquette (10) en fonction du signal agrégé (122) et des données de localisation.

2. Système de suivi de bien (100) selon la revendication 1, dans lequel la propriété de signal est sélectionnée dans le groupe constitué d'une force de signal, d'une qualité de signal, d'une estimation de distance, d'une estimation d'angle et d'une estimation de phase.

3. Système de suivi de bien (100) selon la revendication 2, dans lequel :
- la propriété de signal comprend la force de signal ou la qualité de signal, et dans lequel le retard d'annonce est sélectionné pour être négativement proportionnel à la propriété de signal ; ou
- la propriété de signal comprend l'estimation de distance, et le retard d'annonce est sélectionné pour être proportionnel à la propriété de signal.

4. Système de suivi de bien (100) selon l'une quelconque des revendications précédentes, dans lequel n₂ vaut 0.

5. Système de suivi de bien (100) selon l'une quelconque des revendications 1 à 3 précédentes, dans lequel n₂ vaut n₁ - 1.

6. Système de suivi de bien (100) selon l'une quelconque des revendications précédentes, dans lequel le sous-ensemble adéquat apparenté (111) pour chaque nœud d'écoute (110) comprend tous les nœuds d'écoute (110) de la pluralité de nœuds d'écoute (110) qui peuvent être atteints à partir du nœud d'écoute (110) en n sauts, dans lequel n est sélectionné dans la plage de 1 à 2.

7. Système de suivi de bien (100) selon l'une quelconque des revendications précédentes, dans lequel les nœuds d'écoute (110) sont intégrés dans des dispositifs d'éclairage (1000).

8. Système de suivi de bien (100) selon l'une quelconque des revendications précédentes, dans lequel la pluralité de nœuds d'écoute (110) comprend l₀ nœuds d'écoute (110), dans lequel l₀ ≥ 10, et dans lequel le sous-ensemble adéquat apparenté (111) comprend l₁ nœuds d'écoute (110), dans lequel l₁ ≥ 1, et dans lequel l₁/l₀ ≤ 0,5, et dans lequel le ou les nœuds d'écoute rapporteurs (112) comprennent l₂ nœuds d'écoute (110), dans lequel, l₂ ≥ 1, et dans lequel l₂/l₀ ≤ 0,2.

9. Système de suivi de bien (100) selon l'une quelconque des revendications précédentes, dans lequel au moins une partie de la pluralité de nœuds d'écoute (110) sont compris par un réseau maillé (200).

10. Procédé permettant de suivre une localisation (15) d'une étiquette (10) dans un espace (500), dans lequel l'étiquette (10) émet périodiquement un signal de balise (20), dans lequel une pluralité de nœuds d'écoute (110) sont agencés dans l'espace (500), dans lequel les nœuds d'écoute (110) sont configurés pour détecter le signal de balise (20), dans lequel un système de commande (300) a accès à des données de localisation de la pluralité de nœuds d'écoute (110), dans lequel le procédé comprend :
- la détection du signal de balise (20) avec un sous-ensemble de détection (115) de nœuds d'écoute (110) ; dans lequel chaque nœud d'écoute (110) dans le sous-ensemble de détection (115) :
- détermine une propriété de signal du signal de balise (20) ;
- détermine un retard d'annonce en fonction de la propriété de signal ;
- annonce un signal de mesure (120) après le retard d'annonce à un sous-ensemble adéquat apparenté (111) de la pluralité de nœuds d'écoute (110) à moins que le nœud d'écoute (110) n'ait reçu un nombre prédéterminé de signaux de mesure (120) ;
- la sélection d'un ou plusieurs nœuds d'écoute rapporteurs (112) parmi la pluralité de nœuds d'écoute (110), dans lequel le ou les nœuds d'écoute rapporteurs (112) sont un sous-ensemble adéquat des nœuds d'écoute (110) ;
dans lequel chaque nœud d'écoute (110) qui annonce son signal de mesure au sous-ensemble adéquat apparenté (111) ayant reçu exactement un second nombre prédéfini n₂ de signaux de mesure en provenance du sous-ensemble adéquat apparenté (111), au moment de l'annonce, est sélectionné en tant que l'un parmi le ou les nœuds d'écoute rapporteurs (112), dans lequel n₂ est sélectionné dans la plage de 0 à 10 ;
- la fourniture d'un signal agrégé (122) en provenance du ou des nœuds d'écoute rapporteurs (112) au système de commande (300), dans lequel le signal agrégé (122) comprend des données apparentées à une pluralité de signaux de mesure (120) ;
- le système de commande (300) déterminant la localisation (15) de l'étiquette (10) en fonction du signal agrégé (122) et de données de localisation de la pluralité de nœuds d'écoute (110).

11. Procédé selon la revendication 10, dans lequel :
- la propriété de signal comprend une force de signal ou une qualité de signal, et le retard d'annonce est négativement proportionnel à la propriété de signal ; ou
- la propriété de signal comprend une estimation de distance, et le retard d'annonce est proportionnel à la propriété de signal.

12. Procédé selon l'une quelconque des revendications 10 à 11 précédentes, dans lequel les nœuds d'écoute (110) sont intégrés dans des dispositifs d'éclairage (1000).

13. Procédé selon l'une quelconque des revendications 10 à 12 précédentes, dans lequel la pluralité de nœuds d'écoute (110) comprend l₀ nœuds d'écoute (110), dans lequel l₀ ≥ 10, et dans lequel le sous-ensemble adéquat apparenté (111) comprend n₁ nœuds d'écoute (110), dans lequel l₁ ≥ 1, et dans lequel l₁/l₀ ≤ 0,5, et dans lequel le ou les nœuds d'écoute rapporteurs (112) comprennent l₂ nœuds d'écoute (110), dans lequel l₂ ≥ 1, et dans lequel l₂/l₀ ≤ 0,2.

14. Dispositif d'éclairage (1000) comprenant au moins l'un des nœuds d'écoute (110) pour utilisation dans le système de suivi de bien (100) selon l'une quelconque des revendications 1 à 9 précédentes.
